(19) Europäisches Patentamt
European Patent Office
Office européen des brevets

(11) **EP 1 996 902 B1**

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(21) Anmeldenummer: **07727174.0**

(22) Anmeldetag: **21.03.2007**

(51) Int Cl.:
***G01F 1/84*** *(2006.01)*  ***C21D 7/12*** *(2006.01)*

(86) Internationale Anmeldenummer:
**PCT/EP2007/052698**

(87) Internationale Veröffentlichungsnummer:
**WO 2007/107588 (27.09.2007 Gazette 2007/39)**

(54) **MEßAUFNEHMER VOM VIBRATIONSTYP**

VIBRATION-TYPE MEASUREMENT SENSOR

ENREGISTREUR DE MESURE DU TYPE A VIBRATIONS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.03.2006 DE 102006013601**

(43) Veröffentlichungstag der Anmeldung:
**03.12.2008 Patentblatt 2008/49**

(60) Teilanmeldung:
**08170362.1 / 2 048 480**
**08170363.9 / 2 053 365**

(73) Patentinhaber: **Endress+Hauser Flowtec AG**
**4153 Reinach (BL) (CH)**

(72) Erfinder:
• **BITTO, Ennio**
**CH-4147 Aesch (CH)**

• **LORENZ, Rainer**
**79540 Lörrach (DE)**
• **BERNHARD, Holger**
**79639 Grenzach-Wyhlen (DE)**

(74) Vertreter: **Hahn, Christian**
**Endress + Hauser**
**(Deutschland)AG +Co. KG**
**PatServe**
**Colmarer Strasse 6**
**79576 Weil am Rhein (DE)**

(56) Entgegenhaltungen:
**WO-A1-89/11635      DE-A1- 10 000 796**
**DE-B- 1 171 941      JP-A- 2003 121 234**
**US-B2- 6 807 866**

**Beschreibung**

Die Erfindung betrifft einen, beispielsweise als Coriolis-Massendurchfluß-Meßaufnehmer ausgebildeten, Meßaufnehmer vom Vibrationstyp für ein dem Messen eines in einer Leitung strömenden Mediums dienendes In-Line-Meßgerät.

In der industriellen Meß- und Automatisierungstechnik werden zum hochgenauen Erfassen von Prozeß-Meßgrößen in Leitungen, insb. Rohrleitungen, strömender Medien, insb. zum Erfassen strömungsdynamischer und/oder rheologischer Meßgrößen, oftmals In-Line-Meßgeräte mit einem Meßaufnehmer vom Vibrationstyp verwendet, der wenigstens ein mit der mediumsführenden Rohrleitung kommunizierendes, im Betrieb vibrierendes Meßrohr aufweist. Aufbau, Wirkungsweise sowie Anwendungsmöglichkeiten solcher Meßaufnehmer vom Vibrationstyp sind u.a. in der US-A 41 27 028, der US-A 45 24 610, der US-A 47 68 384, der US-A 47 93 191, der US-A 48 23 614, der US-A 52 53 533, der US-A 53 01 557, der US-A 56 10 342, der US-A 60 06 609, der US-A 60 47 457, der US-B 61 68 069, der US-B 63 14 820, der US-B 63 52 196, der US-B 63 97 685, der US-B 64 50 042, der US-B 64 87 917, der US-B 65 16 674, der US-B 65 19 828, der US-B 65 23 421, der US-B 65 98 281, der US-B 66 66 098, der US-B 66 98 644, der US-B 67 11 958, der US-B 67 69 163, der US-B 67 76 053, der US-B 68 07 866, der US-B 70 05 019, der US-A 2005/0160787, der WO-A 03/048693 oder der der WO-A 05/050144 ausführlich und detailliert beschrieben.

Meßaufnehmer vom Vibrationstyp dienen bekanntlich dazu, im Zusammenspiel mit einer daran angeschlossenen Meßgerät-Elektronik in dem momentan im wenigstens einen Meßrohr geführten Medium mit der zu messenden Prozeß-Meßgröße entsprechend korrespondierende Reaktionskräfte, wie z.B. mit einem Massendurchfluß korrespondierende Corioliskräfte, mit einer Dichte korrespondierende Trägheitskräfte oder mit einer Viskosität korrespondierende Reibungskräfte etc., zu erzeugen und von diesen abgeleitet ein mit der der Prozeß-Meßgröße, beispielsweise dem jeweiligen Massedurchfluß, der jeweilige Viskosität und/oder der jeweilige Dichte des Mediums, entsprechend korrespondierendes Meßsignal zu erzeugen. Das wenigstens eine Meßrohr des Meßaufnehmers ist dafür üblicherweise mediumsdicht, insb. druckdicht, und zumeist auch dauerhaft in den Verlauf der das Medium führenden Rohrleitung, z.B. mittels entsprechender Flanschanschlüsse, eingesetzt. Zum schwingfähigen Haltern des wenigstens eine Meßrohrs ist ferner ein im Vergleich dazu zumeist sehr biegesteif ausgeführtes, rohr- oder rahmenförmiges Trägerelement, beispielsweise aus Stahl, vorgesehen, das ein- und auslaßseitig an das jeweilige Meßrohr mechanisch gekoppelt, beispielsweise direkt daran fixiert, ist. Das Trägerelement kann, wie bei derartigen Meßaufnehmern üblich und auch dem oben genannten Stand der Technik ohne weiteres entnehmbar, mittels entsprechend von außen angebrachten Abdeckungen, wie z.B. rohrabdeckenden Kappen oder seitlich angebrachten Blechen, zum bereits erwähnten Meßaufnehmer-Gehäuse komplettiert oder auch selbst als Meßaufnehmer-Gehäuse ausgebildet sein.

Zum Antreiben des wenigstens einen Meßrohrs umfassen Meßaufnehmer der beschriebenen Art weiters eine mit der jeweiligen Meßgerät-Elektronik elektrisch verbundene Erregeranordnung mit einem auf das Meßrohr mechanisch einwirkenden, insb. elektro-dynamischen oder elektro-magnetischen, Schwingungserreger. Im Betrieb wird die Erregeranordnung von der Meßgerät-Elektronik mittels entsprechender Erregersignale in geeigneter Weise so angesteuert, daß das Meßrohr zumindest temporär Vibrationen, insb. Biegeschwingungen und/oder Torsionsschwingungen, ausführt. Des weiteren ist eine Schwingungsmeßsignale liefernden Sensoranordnung vorgesehen, die zumindest bei Verwendung des Meßaufnehmers als Coriolis-Massendurchfluß-Meßaufnehmer wenigstens zwei voneinander beabstandete, auf einlaß- bzw. auslaßseitige Vibrationen des Meßrohrs reagierende Sensorelemente aufweist.

Neben der Möglichkeit des gleichzeitigen Messens mehrerer solcher Prozeßgrößen strömender Medien, insb. des Massendurchflusses, der Dichte und/oder der Viskosität, mittels ein und desselben Meßgeräts besteht ein weiterer wesentlicher Vorteil von In-Line-Meßgeräten mit Meßaufnehmern vom Vibrationstyp u.a. darin, daß sie innerhalb vorgegebener Betriebsgrenzen eine sehr hohe Meßgenauigkeit bei vergleichsweise geringer Störempfindlichkeit aufweisen. Darüber hinaus kann ein solches Meßgerät für praktisch jedes fließ- oder strömunsgfähige Medium verwendet und in einer Vielzahl verschiedenster Anwendungsbereiche der Meß- und Automatisierungstechnik eingesetzt werden.

Bei In-Line-Meßgeräten der beschriebenen Art, die als Coriolis-Massendurchflußmesser eingesetzt werden, ermittelt die jeweilige Meßgerät-Elektronik im Betrieb u.a. eine Phasendifferenz zwischen den beiden von den Sensorelementen gelieferten Schwingungsmeßsignalen und gibt die Meßgerät-Elektronik an ihrem Ausgang ein davon abgeleitetes Meßwertsignal ab, das einen mit dem zeitlichen Verlauf des Massendurchflusses korrespondierenden Meßwert darstellt. Soll, wie bei derartigen In-Line-Meßgeräten üblich, auch die Dichte des Mediums gemessen werden, so ermittelt die Meßgerät-Elektronik dafür anhand der Schwingungsmeßsignale weiters eine momentane Schwingfrequenz der Meßrohre. Außerdem kann beispielsweise auch die Viskosität des Mediums anhand der zur Aufrechterhaltung von den Meßrohr-Schwingungen erforderlichen Leistung, insb. einem entsprechenden Erregerstrom für die Erregeranordnung, gemessen werden.

Zum Betrieb des Meßaufnehmers, insb. auch zur Weiterverarbeitung oder Auswertung des wenigstens einen Meßsignals, ist dieser, wie bereits angedeutet, mit einer entsprechenden Meßgerät-Elektronik elektrisch verbunden. In der industriellen Mcß- und Automatisierungstechnik ist diese Meßgerät-Elektronik zudem oftmals über ein angeschlossenes Datenübertragungs-System mit anderen Meßgeräten und/oder mit einem entfernten Zentralrechner verbunden, wohin sie die Meßwertsignale, z.B. via digitalen Daten-Bus, sendet. Als Datenübertragungs-Systeme dienen hierbei oftmals, insb. serielle, Bus-Systeme, wie z.B. PROFIBUS-PA, FOUNDATION FIELDBUS sowie die entsprechenden Übertragungs-Protokolle. Mittels des Zentralrechner können die übertragenen Meßwertsignale weiterverarbeitet und als entsprechende Meßergebnisse z.B. auf Monitoren visualisiert und/oder in Steuersignale für entsprechende Stellglieder, wie z.B. Magnet-Ventile, Elektro-Motoren von Pumpen etc., umgewandelt werden. Zur Aufnahme der Meßgerät-Elektronik umfassen solche In-Line-Meßgeräte ferner ein Elektronik-Gehäuse, das, wie z.B. in der WO-A 00/36379 vorgeschlagen, vom Meßaufnehmer entfernt angeordnet und mit diesem nur über eine flexible Leitung verbunden sein kann oder das, wie z.B. auch in der EP-A 1 296 128 oder der WO-A 02/099363 gezeigt, direkt am Meßaufnehmer, insb. auf einem den Meßaufnehmer einhausenden Meßaufnehmer-Gehäuse, angeordnet ist.

Bei Meßaufnehmern der beschriebenen Art haben sich im wesentlichen zwei Arten von Rohrformen am Markt etabliert, nämlich einerseits im wesentlichen gerade Meßrohre und andererseits im wesentlichen in einer Rohrebene gebogene Meßrohre, unter denen die im wesentlichen S-, U- oder V-förmigen die wohl am meisten verwendeten sind. Insbesondere bei dem Messen von Massedurchflüssen dienenden Coriolis-Massedurchfluss-Meßaufnehmern werden bei beiden Arten von Rohrformen aus Symmetriegründen zumeist zwei im Ruhezustand im wesentlichen parallel zueinander verlaufende und zumeist auch parallel vom Medium durchströmte Meßrohre verwendet. Hierzu kann exemplarisch auf die US-A 41 27 028, die US-A 47 68 384, die US-A 47 93 191, US-A 53 01 557, die US-A 56 10 342, US-A 57 96 011 oder US-B 64 50 042 auf die verwiesen werden.

Neben Meßaufnehmern mit einer solchen Doppel-Meßrohranordnung sind aber auch Meßaufnehmer mit einem einzigen geraden oder gebogenen Meßrohr seit längerem am Markt erhältlich. Derartige Meßaufnehmer vom Vibrationstyp mit einem einzigen Meßrohr sind z B. in der US-A 45 24 610, der US-A 48 23 614, der US-A 52 53 533, der US-A 60 06 609, der US-A 60 47 457, der US-A 61 68 069 der US-B 63 14 820, der US-B 63 97 685, der US-B 64 87 917, der US-B 65 16 674, der US-B 66 66 098, der US-B 66 98 644, der US-B 67 11 958, der US-B 68 07 866, der WO-A 03/048693 oder der WO-A 05/050144 beschrieben. Jeder der darin in der gezeigten Meßaufnehmer umfaßt u.a. ein ein einlaßseitiges sowie ein auslaßseitiges Ende aufweisenden, zumindest zeitweise vibrierenden Meßrohr, beispielsweise aus Stahl, Titan, Tantal oder Zirkonium oder geeigneten Legierungen mit einem oder mehreren der vorgenannten Metallen, zum Führen des zu messenden Mediums.

Für den vorbeschriebenen Fall, daß es sich bei dem verwendeten Meßaufnehmer um einen solchen mit einem einzigen Meßrohr handelt, sind im Meßaufnehmer zudem ein, insb. schwingfähig im Meßaufnehmer-Gehäuse aufgehängtes, am Meßrohr fixierter Gegenschwinger vorgesehen, der abgesehen vom Haltern des Schwingungserregers und der Sensorelemente, dazu dient, das vibrierende Meßrohr von der angeschlossenen Rohrleitung schwingungstechnisch zu entkoppeln. Der zumeist aus kostengünstigem Stahl gefertigte - praktisch auch als inneres Trägerelement dienende - Gegenschwinger kann dabei z.B. als ein koaxial zum Meßrohr angeordneter rohrförmiger Kompensationszylinder oder kastenförmiger Tragrahmen ausgeführt sein.

An die in der industriellen Meß- und Automatisierungstechnik verwendeten Meßaufnehmer vom Vibrationstyp werden sehr hohe Anforderungen hinsichtlich der Meßgenauigkeit gestellt, die üblicherweise im Bereich von etwa 0,1% des Meßwerts und/oder 0,01% vom Meßendwert liegt. Dafür ist im besonderen eine sehr hohe Stabilität des Nullpunkts wie auch eine sehr hohe Robustheit der gelieferten Meßsignale erforderlich, besonders auch bei sich im Betrieb erheblich ändernden Umgebungs-, Einspann- und/oder Betriebsbedingungen. Wie bereits in den erwähnten US-A 56 10 342, der US-A 60 47 457, der US-A 61 68 069, der US-B 65 19 828, der US-B 65 98 281, der US-A 66 98 644, der US-B 67 69 163, der WO-A 03/048693 oder der WO-A 05/050144 eingehend diskutiert, ist dabei im besonderen auch der mechanischen Festigkeit, insb. der Wechselfestigkeit, eine erhebliche Bedeutung beizumessen, mit der das wenigstens eine Meßrohr am wenigstens einen Trägerelement fixiert ist. Abgesehen davon, daß davon die Betriebssicherheit des gesamten Meßgeräts abhängig können bereits geringste Abweichung der Festigkeit dieses Verbindung von der beim Kalibrieren vorgefundenen Situation zu dem auch erhebliche, nicht mehr beherrschbare Schwankungen des Nullpunkts und somit praktisch unbrauchbare Meßsignale zur Folge haben. Üblicherweise können solche, auf Entfestigungen im Meßaufnehmer zurückzuführenden Nullpunktfehler zufriedenstellend lediglich durch Einbau eines neuen In-Line-Meßgeräts behoben werden.

Einen erheblichen Einfluß auf die Meßgenauigkeit im allgemeinen und die Stabilität des Nullpunkts im besonderen hat, wie auch bereits in der US-A 56 10 342, der US-A 60 47 457, der US-B 61 68 069, der US-A 65 98 281, der US-B 66 34 241 oder auch der WO-A 03/048693 ausführlich diskutiert, die für die Befestigung des Meßrohrs innerhalb des äußeren Trägerelements und dem ggf. vorhanden Gegenschwinger angewandte Fügtechnik, Traditionell werden die Meßrohre und Trägerelement zumindest anteilig aneinander stoffschlüssig durch Löt- und/oder Schweißverbindungen fixiert. So ist beispielsweise bereits in der US-A 48 23 614 beschrieben, daß die jeweilige Ende des einen Meßrohrs in eine jeweilige Bohrung eines einlaßseitigen bzw. eines auslaßseitigen Endstücks des Trägerelements eingesteckt und darin durch stirnseitiges und/oder rückseitiges Schweißen, Löten oder Hartlöten fixiert sind, vgl. die in einigen der Figuren zu sehenden Materialwülste. Die Endstücke sind ihrerseits in einem Mantelrohr des äußeren Trägerelements fixiert. Weitere Beispiele für solche stoffschlüssigen Verbindungen von Meßrohr und Trägerelement sind u.a. auch in der US-B 61 68 069, der US-B 63 52 196, der US-B 65 19 828, der US-B 65 23 421, der US-B 65 98 281, der US-B 66 98 644 oder der US-B 67 69 163 gezeigt.

Wie in der US-A 56 10 342 beschrieben, hinterläßt die während des erwähnten Schweißens, Lötens oder Hartlöten nötige Wärmezufuhr an den Fixierstellen der Meßrohre mit den Endstücken nach dem Abkühlen einen mechanischen Spannungszustand, der zu Spannungsriß-Korrosion führen kann, die die Fügestelle und/oder das Meßrohr-Material mehr oder weniger schwächen können. Als ein weiteres Problem solcher stoffschlüssigen Schweiß- oder Lötverbindungen sind in der US-B 65 19 828 oder der US-B 65 98 281 auch materialverschleißende Schwingungsreibungen im Bereich der Fügestellen genannt. Darüber hinaus können sich, wie auch der US-A 60 47 457, der US-B 61 68 069, der US-B 63 52 196, der US-B 65 98 281, der US-B 66 34 241, der US-B 65 23 421 oder der US-B 66 98 644 entnehmbar, im besonderen bei der Verwendung von unterschiedlichen Metallen für Trägerelement und Meßrohr, beispielsweise Stahl und Titan, Probleme hinsichtlich der Dauerfestigkeit der dann verwendeten Lotverbindungen auftreten, die sich u.a. auf unzurcichende Benetzung und/oder in radialer Richtung wechselnde mechanische Beanspruchungen der Fügestellen zurückführen lassen. Infolgedessen ist oftmals eine Verringerung der nominellen Auszugsfestigkeit des Meßrohrs aus dem Trägerelement zu verzeichnen. Des weiteren sind an wärmebehandelten Meßrohren durchaus auch tiefgehende Veränderungen des Material selbst zu verzeichnen, sei es nun hinsichtlich der Gefügestruktur oder der chemischen Zusammensetzung. Damit einhergehend ist mit erheblichen Veränderungen der für die Schwingungseigenschaften wie auch für die Bauteilfestigkeit des Meßaufnehmers relevanten Materialparameter, wie z.B. des Elastizitätsmoduls, der Bruchfestigkeit, der Duktilität etc. zu rechnen. Dies kann im besonderen die Verwendungsmöglichkeiten von Meßaufnehmern der beschriebenen Art in Anwendungsbereichen mit extrem hohen oder tiefen Mediumstemperaturen und/oder erheblichen Temperaturschwankungen wie auch in Anwendungsbereichen mit extrem hohen Mediumsdrücken von weit über 500 bar erheblich beeinträchtigen.

Zur Verbesserung der Dauerfestigkeit von Meßaufnehmern der beschriebenen Art wurde in der bereits erwähnten US-A 56 10 342 wie auch der WO-A 03/048693 jeweils ein Fixier-Verfahren für Meßrohre in Endstücken des Trägerelement vorgeschlagen, bei dem jedes Ende des Meßrohrs in eine entsprechende Bohrung eines einlaßseitigen bzw. eines auslaßseitigen Endstücks eingesteckt und mittels eines in das Ende eingebrachten Walz-Werkzeugs mit der Innenwand der Bohrung, insb. ohne Wärmezufuhr, verpreßt werden, wodurch eine hochfeste Reibschlußverbindung zwischen dem ersten und dem zweiten Bauteil gebildet wird. Ein für dieses Verfahren entsprechend geeignetes Walz-Werkzeug ist beispielsweise auch in der US-A 40 90 382 im Rahmen eines Verfahrens zum Fertigen von Boilern oder Wärmetauschern beschrieben.

Eine weitere Möglichkeit zur Herstellung solcher mittels hochfester Reibschluß gebildeten Verbindungen zwischen Meßrohr und Trägerelement besteht, wie z.B. auch in der US-A 60 47 457 vorgeschlagen, darin, daß das Endstück, nach dem es auf das Meßrohr aufgeschoben bzw. aufgesteckt worden ist, mittels eines Preß-Werkzeuges von außen zusammendrückt und dabei unterhalb einer Rekristallisationstemperatur des Endstück-Materials, insb. bei Raumtemperatur, gemischt plastisch-elastisch verformt wird. Die dafür aufgewendeten Verformungskräfte sind dabei jeweils so ausgebildet, daß das Meßrohr im wesentlichen keine Querschnittsverjüngungen und/oder - verengungcn erfährt, so daß ein initialer Innen-Durchmesser des Meßrohrs auch nach dem Fixieren praktisch durchgängig unverändert erhalten bleibt. Eine für das Verpressen entsprechend geeignete Vorrichtung ist beispielsweise in der US-A 37 45 633 gezeigt. Alternativ oder in Ergänzung zum plastisch-elastischen Verpressen kann ein solches mittels Reibschluß gebildeter Verbund beispielsweise auch dadurch hergestellt werden, daß, wie z.B. in der US-B 65 98 281 oder der US-B 65 19 828 gezeigt, ein entsprechender Metallkörper - sei es nun vorgenanntes Endstück oder eine auf dem Meßrohr plazierte Metallhülse etc. - auf das Meßrohr thermisch aufgeschrumpft oder, wie auch in der WO-A 05/050144 gezeigt, das Endstück unter Zwischenlage elastisch verformbarer Klemmelemente mit dem Meßrohr verspannt wird.

Weiterführend ist in der US-B 65 98 281 oder der US-B 65 19 828 diskutiert worden, daß auch bei rein reibschlüssigen Preßverbindungen aufgrund von Schwingungsreibung ein allfälliges Entfestigen des Verbund-Systems nicht immer sicher vermieden werden kann. Überdies können solchen Schwingungsreibungen die Materialien des Verbund-Systems im Bereich der einander kontaktierenden Oberflächen korrodieren lassen. Des weiteren können, wie der WO-A 03/048693 entnehmbar, die üblicherweise unterschiedlichen Ausdehnungsverhalten der erwähnten Endstücke und der darin jeweils eingespannten Rohrsegmente des Meßrohrs dazu führen, daß die durch das Endstück auf das Meßrohr ausgeübten Einspannkräfte bei Temperaturschwankungen, insb. bei allfälligen Temperaturschocks wie sie z.B. bei turnusmäßig durchgeführten Reinigungsmaßnahmen mit extrem heißen Spül-Flüssigkeiten auftreten können, unter einen kritischen Wert sinken können. Dies wiederum kann bedeuten, daß das Endstück und das Meßrohr aufgrund von thermisch bedingten Ausdehnungen stellenweise den durch das Walzen, Pressen oder Aufschrumpfen herbeigeführten mechanischen Kontakt verlieren und somit die Preßverbindung in unzulässigem Maße entfestigt werden können. Infolgedessen können wiederüm die Auszugsfestigkeit des Meßrohrs aus dem jeweiligen Endstück sinken und insoweit auch mit derartigen Preßverbänden die geforderte hohe Nullpunktstabilität des Meßaufnehmers nicht ohne weiteres sichergestellt werden. Zur Behebung der durch Schwingungsreibung zwischen Meßrohr und jeweiligem Endstück verursachten Mängel in Meßaufnehmern der beschriebenen Art wird in der US-B 65 98 281 bzw. der US-B 65 19 828 vorgeschlagen, die zugehörigen Bauteile nach dem Herstellen des Preßverbandes, insb. unter Verwendung eines als Zwischenlage dienenden Füllmaterials, zusätzlich miteinander zu verschweißen, was allerdings ggf. die oben erwähnten, mit Schweißverbindungen einhergehenden Probleme erneut aufwerfen kann. Demgegenüber wird in der WO-A 03/048693 vorgeschlagen, eine erhöhte Verdreh-Festigkeit von Meßrohr und Endstück dadurch zu erreichen, daß eine in Richtung der Längsachse des Verbund-System verlaufende Nut in die Innenwand des Endstücks eingeformt ist, die unter Bildung eines in einer Umfangrichtung wirkenden Formschluß ein Verdrehen des Meßrohrs gegenüber dem Endstück wirksam verhindern kann. Allerdings kann auch diese Verbindung, insb. bei Anwendung in einem Meßaufnehmer mit zumindest zeitweise Biegeschwingungen ausführendem Meßrohr, eine Verringerung der nominellen Auszugsfestigkeit erfahren, sei es durch Schwingungsreibung und/oder durch thermisch bedingtes Dehnen.

Neben der Stabilität des Nullpunktes hat nicht zuletzt auch die Empfindlichkeit des Meßaufnehmers einen erheblichen Einfluß auf die Genauigkeit mit der die jeweilige Prozeß-Meßgröße gemessen wird. Trotzdem davon auszugehen ist, daß Meßgerät-Elektroniken von In-Line-Meßgeräten der beschriebenen Art immer leistungsfähiger und insoweit immer präziser werden, ist in diesem Zusammenhang aber nach wie vor auch der mechanischen Empfindlichkeit des Meßaufnehmers eine immense Bedeutung für die Meßgenauigkeit bei zu messen. Die mechanische Empfindlichkeit wiederum hängt neben der Länge des Meßrohrs sehr stark auch vom Verhältnis des Innen-Durchmessers des Meßrohrs zu dessen Wandstärke ab. Allerdings kann umgekehrt das Material des Meßrohrs bei im Hinblick auf den Betriebsdruck zu geringer Wandstärke lokal bis über die Fließgrenze beansprucht werden, was wiederum eine Herabsetzung der Bruchfestigkeit des Meßrohrs insgesamt bedingen würde.

Bei der Dimensionierung von Meßaufnehmern der beschriebenen Art ergibt sich insoweit ein Konflikt dahingehend, daß einerseits eine hohe Festigkeit für das Meßrohr sicherzustellen und somit je nach verwendetem Material eine entsprechend große Wandstärke für das Meßrohr zu wählen ist. Anderseits ist jedoch die Wandstärke aufgrund der erforderlichen hohen Meßempfindlichkeit möglichst gering zu halten. Dies führt im Ergebnis dazu, daß Meßaufnehmer der beschriebenen Art bislang überwiegend für Anwendungen mit niedrigen oder mittleren Betriebsdrücken bis etwa 400 bar oder darunter angeboten werden können. Meßaufnehmer für Anwendungen mit hohen Betriebsdrücken von weit über 500 bar, wie sie beispielsweise in Anwendungen mit komprimiertem Wasserstoff oder anderen hochkomprimierten Gasen vorzufinden sind, können bislang allenfalls mit nur sehr geringen nominellen Nennweiten von weniger als 10 mm kommerzielle angeboten werden und sind zudem extrem teuer.

DE 100 00 796 A1 offenbart ein Verfahren zur Erhöhung der Druck festigkeit gebogener Rohrleitungen, beispielsweise Kraftstoff-Leitungen, durch Antofrettieren.

Ausgehend von den vorbeschriebenen Nachteilen besteht eine Aufgabe der Erfindung darin, Meßaufnehmer der beschriebenen Art dahingehend zu verbessern, daß deren jeweilige Dauerfestigkeit, insb. auch trotz hoher Mediumsdrücke, erhöht werden kann, und zwar unter Beibehaltung einer nach wie vor möglichst hohen Empfindlichkeit gegenüber den primären Meßgrößen, etwa dem Massendurchfluß, der Dichte und/oder der Viskosität. Darüber hinaus ist es eine Aufgabe der Erfindung, die Konstruktion solcher Meßaufnehmer dahingehend zu verbessern, daß diese trotz hoher Druck- und Vibrationsfestigkeit nach wie vor möglichst kompakte Einbaumaße aufweisen können. Zu dem soll der Meßaufnehmer möglichst einfach und kostengünstig zu fertigen und möglichst auch für Nennweitenbereiche von 10 mm oder darüber einsetzbar sein.

Zur Lösung der Aufgaben besteht die Erfindung in einem Meßaufnehmer vom Vibrationstyp, insb. Coriolis-Massendurchfluß-Mcßaufnehmer, für ein dem Messen eines in einer Leitung strömenden Mediums dienendes In-Line-Meßgerät gemäß Anspruch 1.

Gemäß einer Weiterbildung der Erfindung ist der Meßaufnehmer für die Verwendung in einem dem Messen und/oder Überwachen wenigstens eines Parameters, beispielsweise einem Massendurchfluß, einer Dichte, einer Viskosität etc., eines in der Rohrleitung strömenden Mediums dienenden In-Line-Meßgerät vorgesehen. Im besonderen ist dabei vorgesehen, den Meßaufnehmer und insoweit auch das damit gebildete In-line-Meßgerät zum Messen eines in einer Rohrleitung strömenden Mediums zu verwenden, das mit einem Druck von mehr als 500 bar, insb. von über 700 bar, auf das Meßrohr wirkt.

Schließlich besteht die Erfindung ferner auch in einem Verfahren zum Herstellen eines Meßaufnehmers vom Vibrationstyp, beispielsweise eines Coriolis-Massendurchfluß-Meßaufnehmers, für ein dem Messen eines in einer Leitung strömenden Mediums dienendes In-Line-Meßgerät, welcher Meßaufnehmer wenigstens ein mit der Leitung kommunizierendes Meßrohr zum Führen des Mediums, sowie ein das wenigstens eine Meßrohr schwingfähig halterndes Trägerelement aufweist, wobei das Verfahren einen Schritt des Autofrettierens des Meßrohrs umfaßt.

Nach einer Ausgestaltung des erfindungsgemäßne Verfahrens umfaßt dieses weiters einen Schritt des Montieren des Meßrohrs im Trägerelement. Diese Ausgestaltung weiterbildend ist ferner vorgesehen, daß der Schritt des Autofrettierens des Meßrohrs nach dem Montieren des Meßrohrs im Trägerelement durchgeführt oder zumindest erst nach dem Montieren des Meßrohrs im Trägerelement beendet wird.

Ein Grundgedanke der Erfindung ist es, die Fixierung von Meßrohren eines Meßaufnehmers vom Vibrationstyp im Trägerelement mittels möglichst weitgehend vibrationsfesten Rohrverschraubungen vorzunehmen. Durch die Verwendung von Rohrverschraubungen, welche zu dem auch weitgehend hochdruckfest ausgebildet sind, einhergehend mit der Verwendung auch ausreichend druckfester Meßrohre, können somit auf vergleichsweise einfachem Wege gleichermaßen druckfeste Meßaufnehmer der in Rede stehenden Art geschaffen werden. Ein weiterer Grundgedanke der Erfindung besteht darin, die Empfindlichkeit solcher Meßaufnehmer dadurch weiter zu verbessern, daß besonders hochfeste Materialien für das jeweilige Meßrohr verwendete werden, wie etwa hochfeste Edelstahl-Legierungen, und durch Autofrettage zusätzlich verfestigte Metalle. Dem wiederum kommt die Verwendung von Rohrverschraubungen besonders entgegen, da somit auf Löt- oder Schweißverbindungen zum Zwecke der Fixierung des jeweiligen Meßrohrs am Trägerelement durchaus verzichtet werden kann. Infolge dessen können das Meßrohr wieder entfestigende Überhitzungen von dessen Material bei der Fertigung des Meßaufnehmers ohne weiteres vermieden werden. Um den Aufbau und somit auch die Fertigung von Meßaufnehmern der beschriebenen Art weiter zu vereinfachen, ist ferner vorgesehen, das Trägerelement mittels eines balken- oder blockförmigen Bauteils herzustellen, in dem lediglich endseitig entsprechende Durchgangskanäle für die strömungstechnische Anbindung des Meßrohrs an die Rohrleitung vorgesehen sind, wobei die Durchgangskanäle selbst wie auch allenfalls erforderliche Verteilerelemente beispielsweise mittels entsprechender Sacklochbohrungen sehr einfach hergestellt werden können.

Ein Vorteil des erfindungsgemäßen Meßaufnehmers ist u.a. darin zu sehen, daß er einerseits sehr einfach aufgebaut ist und daß anderseits zu dessen Fertigung weitgehend auf handelsübliche und insoweit standardisierte, ggf. sogar für Anwendungen mit hohen Betriebsdrücken zugelassene oder zertifizierte, Einzelkomponenten zurückgegriffen werden kann.

Die Erfindung sowie vorteilhafte Ausgestaltungen werden nun anhand von Figuren der Zeichnung näher erläutert, wobei

Fig. 1 perspektivisch ein In-Line-Meßgerät zum Messen eines in einer angeschlossenen Leitung strömenden Mediums zeigt,

Fig. 2a, 3a Ausführungsbeispiele eines für ein In-Line-Meßgerät gemäß

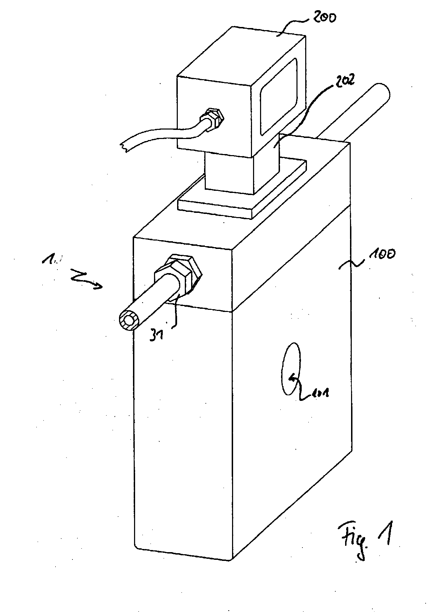

und 4a Fig. 1 geeigneten Meßraufnehmers vom Vibrationstyp in jeweils einer ersten Seitenansichten zeigen,

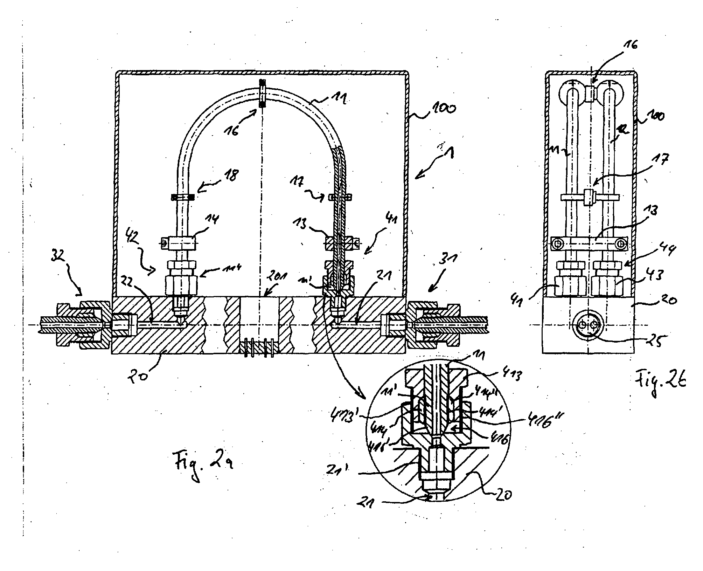

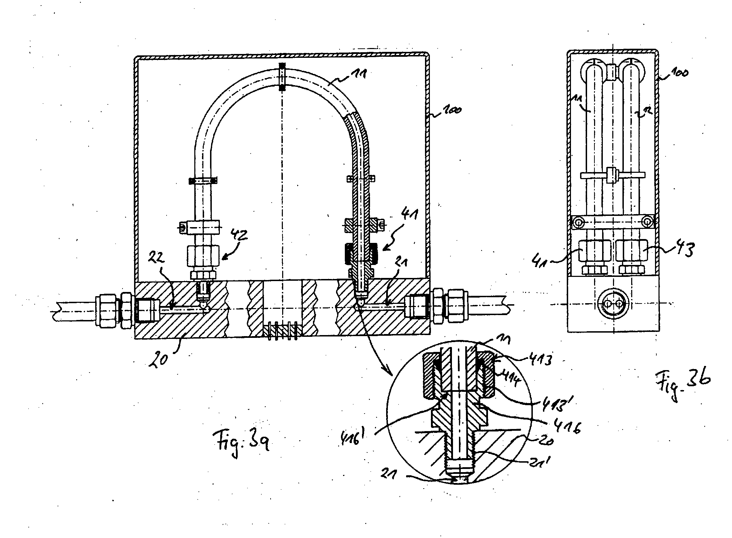

Fig. 2b, 3b mit den Ausführungsbeispielen in Fig. 2a, 3a, 4a

und 4b entsprechend korrespondierende zweite Seitenansichten Meßraufnehmers des zeigen,

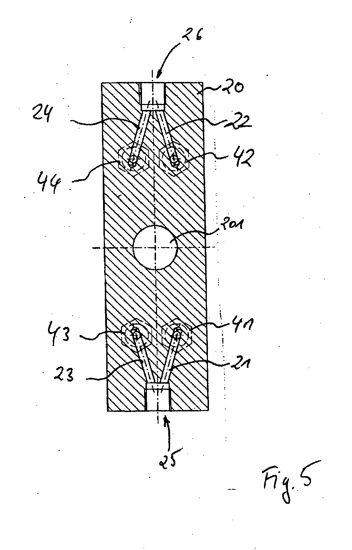

Fig. 5 im Schnitt ein für einen Meßaufnehmer gemäß den Fig. 2a, b, c bis 4 a, b, c geeignetes Trägerelement mit darin eingebrachten Durchlaßkanälen für zu messendes Medium zeigt,

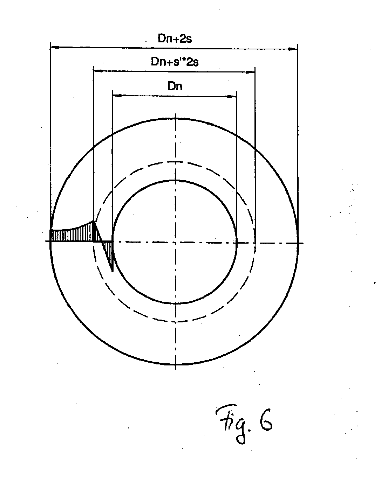

Fig. 6 schematisch einen Querschnitt eines für einen Meßaufnehmer gemäß den Fig. 2a, b, c bis 4 a, b, c geeigneten Meßrohrs mit einem darin eingetragenem Diagramm das einen radialen Verlauf von im Meßrohr auftretenden Tangentialspannungen zeigt, und

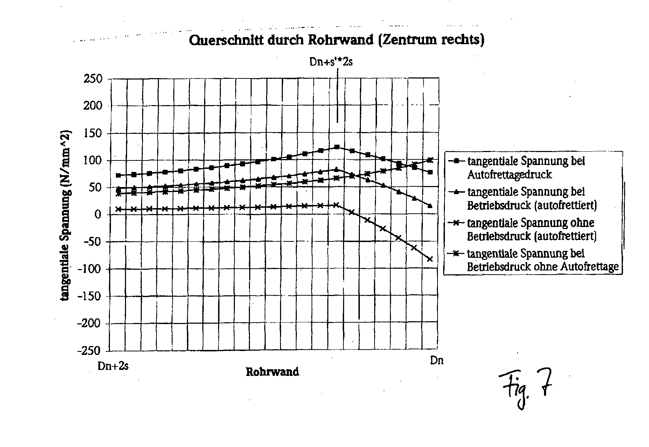

Fig. 7 exemplarisch radiale Verläufe von Tangentialspannungen zeigt, die in Meßrohren von Vibrationstyp-Meßraufnehmern zu verschiedenen Zeitpunkten, insb. bei auch verschiedenen Betriebszuständen, auftreten können.

In der Fig. 1 ist ein in eine Rohrleitung, beispielsweise eine Prozeßleitung einer industriellen Anlage, einfügbares, beispielsweise als Coriolis-Massendurchflußmeßgerät, Dichtemeßgerät, Viskositätsmeßgerät oder dergleichen ausgebildetes, In-Line-Meßgerät dargestellt, das dem Messen und/oder Überwachen wenigstens eines Parameters, beispielsweise einem Massendurchfluß, einer Dichte, einer Viskosität etc., eines in der Rohrleitung strömenden Mediums dient. Das In-Line-Meßgerät umfaßt dafür eine entsprechende, in einem Elektronik-Gehäuse 200 untergebrachte - hier nicht weiter dargestellte - Meßgerät-Elektronik sowie einen mit dieser elektrisch verbundenen Meßaufnehmer 1 vom Vibrationstyp, welcher Meßaufnehmer im Betrieb entsprechend vom zu messenden Medium durchströmt ist. Der Meßaufnehmer 1 dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so mittels der entsprechend konfigurierten Meßgerät-Elektronik in der dem Fachmann bekannten Weise z.B. ein Massedurchfluß $m$, eine Dichte $r$ und/oder eine Viskosität $h$ des Mediums gemessen werden. Der Meßaufnehmer ist dafür im Benutzungsfall in den Verlauf einer zumindest zeitweise von einem zu messenden, insb. unter hohen Druck von über 500 bar gehaltenen, Medium durchströmten Rohrleitung einzufügen und an diese vor der Inbetriebnahme entsprechend anzuschließen. Im besonderen ist der Meßaufnehmer und insoweit das In-Line-Meßgerät dafür vorgesehen, Medien mit Drücken von 700 bar oder darüber zu messen, wie sie beispielsweise bei Anwendungen mit komprimiertem Wasserstoff auftreten können.

In den Fig. 2a, b, 3a, b sowie 4a, b sind nachfolgend näher erläuterte Ausführungsbeispiele für den erfindungsgemäßen Meßaufnehmer schematisch dargestellt, wobei hierbei lediglich die für die Erläuterung der Erfindung unbedingt notwendigen Komponenten gezeigt sind. Zur vollen Funktion des Meßaufnehmers gegebenenfalls erforderliche weitere Komponenten können aus Übersichtlichkeitsgründen weggelassen sein. Dies im besonderen auch deshalb, weil der Aufbau, die Funktionsweise wie auch die Anwendungsgebiete solcher Meßaufnehmer dem Fachmann an und für sich bekannt sind; insoweit wird u.a. auf die eingangs bereits erwähnten Dokumente des Standes der Technik verwiesen.

Zum Führen des zu messenden Mediums umfaßt der Meßaufnehmer 1 wenigstens ein mit der angeschlossenen Rohrleitung kommunizierendes, insb. metallisches, Meßrohr 11, das im Betrieb zumindest zeitweise von zu messendem Medium durchströmt ist. Das wenigstens eine Meßrohr 11 kann, wie bei derartigen Meßaufnehmern üblich, in einer Rohrebene einfach, z.B. U-förmig oder V-förmig, gekrümmt sein; falls, erforderlich, kann es aber auch nur sehr wenig gebogen oder im wesentlichen gerade sein. Ferner ist es auch möglich ein zwei- oder mehrfach gewundenes, z.B.

helixförmiges, Meßrohr für den Meßaufnehmer zu verwenden. Gemäß einer Ausgestaltung der Erfindung ist ferner vorgesehen, daß das wenigstens eine Meßrohr 11 einen Innen-Durchmesser DN von zumindest 2 mm, insb. von größer 5 mm, aufweist. Gemäß einer anderen Ausgestaltung der Erfindung ist ferner vorgesehen, daß das wenigstens eine Meßrohr eine Meßrohr-Wandstärke s von höchstens 5 mm, insb. von weniger als 3 mm, aufweist. Erfindungsgemäß ist das wenigstens eine Meßrohr 11 so ausgebildet das ein Verhältnis DN/s des Innen-Durchmessers des Meßrohrs zu dessen Meßrohr-Wandstärke s wenigstens 1,2 beträgt, insb. aber größer als 2 ist. Um dabei einen nach wie vor ausreichend hohe Druckfestigkeit, von beispielsweise 700 bar oder darüber, gewährleisten zu können, besteht das wenigstens eine Meßrohr nach einer weiteren Ausgestaltung der Erfindung aus rostfreiem Edelstahl von erhöhter Festigkeit. Als Material kann hierbei beispielsweise ein Duplex-Stahl, insb. UNS S31803 (ASTM A240) oder EN 1.4462 (DIN EN 10088-2), ein Superduplex-Stahl, insb. UNS S32750 (ASTM A240), UNS S32760 (ASTM A240), UNS S32520 (ASTM A240), UNS S32550 (ASTM A240), EN 1.4501 (DIN EN 10088-2) oder EN 1.4507 (DIN EN 10088-2), oder ein anderer Chrom-Nickel-Mangan-Molybdän-Stahl, insb. UNS S31675 (ASTM F1586), oder dergleichen dienen

Das wenigstens eine Meßrohr 11 ist mittels eines im Vergleich dazu eher starren, insb. metallischen, Trägerelements 20 schwingfähig gehaltert. Dafür ist das Meßrohr 11 zumindest an einem ersten und an einem zweiten Ende am Trägerelement 20 fixiert. Gemäß einer Ausgestaltung der Erfindung ist das Trägerelement 20 dabei als ein massives, insb. monolithisches und/oder blockförmiges, Bauteil ausgebildet. Als Trägerelement 20 kann z.B. ein Profilstab oder auch eine Platte von geeignetem beispielsweise drei-, vier- oder mehreckigem, elliptischem oder kreisrundem, Querschnitt und geeignetem Material, beispielsweise Stahl oder dergleichen, dienen. In den hier gezeigten Ausführungsbeispielen ist das Trägerelement 20 als ein aus Vollmaterial bestehendes, im wesentlichen balkenförmig ausgebildetes Prisma mit rechteckigem Querschnitt ausgebildet. Um ein möglichst robustes und mechanisch stabiles Trägerelement bereitzustellen ist dessen Masse gemäß einer anderen Ausgestaltung so gewählt daß mindestens zehnmal größer ist als die Masse des wenigstens einen Meßrohrs 11. Als Material für das Trägerelement 20 kann beispielsweise Schwarzstahl oder auch Edelstahl dienen.

Zum Bilden eine durchgehenden Strömungspfades zwischen dem wenigstens einen Meßrohr 11 und der im Betrieb angeschlossenen Leitung weist das Trägerelement 20 ferner wenigstens einen darin eingebrachten einlaßseitigen ersten Durchlaßkanal 21 sowie einen auslaßseitigen zweiten Durchlaßkanal 22 auf, über die das wenigstens eine Meßrohr 11 im Betrieb mit dem einlaßseitig und auslaßseitig jeweils angeschlossenen Rohrleitungsabschnitt kommuniziert. Für den hier gezeigten Fall, daß das Trägerelemerit 20 aus Vollmaterial besteht können die darin jeweils vorgesehenen Durchlaßkanäle jeweils mittels miteinander entsprechend kommunizierenden, gegebenenfalls zueinander schräg verlaufenden, Sacklochbohrungen in einfacher Weise realisiert sein. Für den oftmals gewünschten Fall, daß der Meßaufnehmer 1 lösbaren mit der Rohrleitung zu montieren sein soll, ist einlaßseitig und auslaßseitig am Trägerelement 20 jeweils ein der tatsächlichen Einbausituation entsprechend angepaßtes Verbindungselement 31 bzw. 32 vorgesehen. Bei dem jeweiligen Verbindungselement kann es sich beispielsweise um einen Flansch, einen Triclamp®-Anschluß oder aber auch um einen Teil einer, insb. auch hochdruckfesten, Rohrverschraubung handeln. Falls erforderlich, können aber auch andere, dem Fachmann bekannte mediumsdichte wie auch vibrationsfeste Rohrverbinder als Verbindungselement verwendet werden. Das jeweilige Verbindungselement 31, 32 selbst kann am Trägerelement 20 beispielsweise dadurch fixiert sein, daß es mit diesem verschweißt und/oder, wie in den Figuren schematisch dargestellt, verschraubt ist.

Wie aus der Zusammenschau der Figuren zudem ohne weiteres ersichtlich, umfaßt der Meßwandler ferner eine das wenigstens eine Meßrohr 11 mediumsdicht einhausende und von diesem beabstandet am Trägerelement fixierte, insb. ebenfalls metallische, Meßrohr-Gehäusekappe 100. Die Meßrohr-Gehäusekappe 100 kann beispielsweise mit dem Trägerelement 20 verschweißt, verlötet und/oder verschraubt sein. Wie in der Fig. 1 ferner dargestellt, kann die Meßrohr-Gehäusekappe 100 gegebenenfalls mit einer den Meßaufnehmer vor darin allfällig aufgebauten Überdruck schützenden Druckausgleichsöffnung 101 versehen sein. Diese kann beispielsweise mittels einer Berstscheibe oder mittels eines Überdruckventils ausreichend dicht verschlossen sein.

Zum Erzeugen von mit der physikalischen Meßgröße - beispielsweise dem Massedurchfluß, der Dichte und/oder der Viskosität des zu messenden Mediums - korrespondierenden und insoweit das Medium beschreibenden Reaktionskräften - beispielsweise mit dem Massedurchfluß korrelierten Corioliskräften, mit der Dichte korrelierten Trägheitskräften und/oder mit der Viskosität korrelierten Reibungskräften etc. - wird das wenigstens eine Meßrohr im Betrieb zumindest zeitweise in für die Messung geeigneter Weise vibrieren gelassen. Gemäß einer Ausgestaltung der Erfindung ist vorgesehen, das wenigstens eine Meßrohr 11 im Betrieb zumindest anteilig zu Biegeschwingungen um eine gedachte Schwingungsachse anzuregen, deren Schwingungsfrequenz möglichst gleich einer momentanen mechanischen Eigenfrequenz des Meßrohrs 11 mit darin geführtem Medium ist. Zum Antreiben des wenigstens eine Meßrohrs 11 ist ferner ein darauf einwirkenden elektro-mechanischen Schwingungserreger 16 vorgesehen, der im Betrieb von der vorgenannten Meßgerät-Elektronik des In-Line-Meßgeräts entsprechend gespeist ist. Zum Erfassen von Vibrationen des Meßrohrs und zum Erzeugen von mit diesen korrespondierenden Vibrationssignalen können in der dem Fachmann bekannten Weise entsprechende Schwingungssensoren 17, 18 am Meßrohr 11 und/oder in dessen Nähe angebracht sein, die mit der erwähnten Meßgerät-Elektronik in geeigneter Weise verbunden sind. Als Schwingungssensoren können die für diesen Zweck im Stand der Technik beschriebenen verschiedenen Arten von Sensoren dienen, wie z.B. elektrodynamisch oder optisch arbeitende Weg-, Geschwindigkeits- oder Beschleunigungssensoren. Bei den hier gezeigten Ausführungsbeispielen ist, wie bei als Coriolis-Massendurchflußaufnehmern dienenden Meßaufnehmern der beschriebenen Art üblich, jeweils ein einlaßseitiger erster und ein auslaßseitiger zweiter Schwingungssensor 17, 18 für einlaß- bzw. die auslaßseitigen Schwingungsbewegungen des wenigstens einen Meßrohrs vorgesehen. Jeder der beiden Schwingungssensoren 17, 18 ist dabei jeweils etwa im gleichen Abstand zwischen dessen Mitte und dem einlaß- bzw. dem auslaßseitigen Ende des Meßrohrs 11 angeordnet.

Wie beispielsweise aus der Zusammenschau von Fig. 1, 2a, b und 5 ohne weiteres ersichtlich, ist im Trägerelement 20 ferner eine entsprechende Durchführungsöffnung 201 für dem Verbinden des Schwingungserregers 16 wie auch der Schwingungssensoren 17, 18 mit der Meßgerät-Elektronik dienende Verbindungsleitungen vorgesehen. Die Durchführungsöffnung 201 kann gegebenenfalls nach dem Verlegen der Verbindungsleitung entsprechend dicht verschlossen werden, beispielsweise mittels Vergußmasse und/oder Glas bzw. Keramik. Das der Unterbringung der Meßgerät-Elektronik dienende Elektronik-Gehäuse 200 kann, wie auch in Fig. 1 gezeigt, auf der dem wenigstens einen Meßrohr abgewandten Seite am Trägerelement 20, beispielsweise über ein zwischenliegendes Halsstück 202, fixiert sein, so daß das In-Line-Meßgerät als ein Kompaktgerät ausgebildet werden kann. Das Elektronik-Gehäuse kann aber beispielsweise auch in einfacher Weise mittels einer Elektronik-Gehäusekappe gebildet sein, die auf der Meßrohr abgewandten Seite direkt am Trägerelement 20 entsprechend fixiert, beispielsweise angeschweißt oder angeschraubt, ist.

Bei den hier gezeigten Meßaufnehmern 10 ist jeweils eine Doppelrohranordnung vorgesehen, die mittels eines als erstes Meßrohr dienenden ersten Aufnehmerrohrs 11 und mittels eines, insb. zum ersten Aufnehmerrohr 11 im wesentlichen baugleichen und/oder parallele verlaufenden, als zweites Meßrohr dienenden zweiten Aufnehmerohr 12 gebildet ist. Jedes der beiden, insb. im wesentlichen identisch geformten, Meßrohre 11, 12 der Doppelrohranordnung ist jeweils in der vorbeschriebenen Weise ein- und auslaßseitig entsprechend am Trägerelement 20, das in den hier gezeigten Ausführungsbeispielen als ein aus Vollmaterial bestehendes, im wesentlichen block- oder balkenförmiges Bauteil mit rechteckigem Querschnitt ausgebildet ist, strömungsleitend und schwingfähig fixiert. Das Trägerelement 20 weist hierfür entsprechend mehrere darin eingebrachte Durchlaßkanäle 21, 22, 23, 24 auf, an die die wenigstens zwei Meßrohre 11, 12, insb. in gleicher Weise, jeweils angeschlossen sind.

Damit die beiden Meßrohre 11, 12 im Betrieb gleichzeitig von zu messendem Medium durchströmt werden können, ist einlaßseitig und auslaßseitig im Trägerelement 20 jeweils ein Strömung aufteilendes oder wieder zusammenführendes Verteilerelement 25, 26 vorgesehen, das im Betrieb über das jeweils zugehörige Verbindungselement 31, bzw. 32 einerseits mit dem daran jeweils angeschlossenen Rohrleitungsabschnitt kommuniziert sowie anderseits in die beiden Meßrohre 11, 12 entsprechend einmündet. Gemäß einer Ausgestaltung der Erfindung ist ferner vorgesehen, daß jedes der beiden Verteilerelemente 25, 26 als integraler Bestandteil des Trägerelements 20 ausgebildet ist, und zwar derart, daß das Trägerelement 20 zumindest im Bereich dieser Verteilerelemente 25, 26 frei von Fügestellen, insb. aber frei von Löt- oder Schweißverbindungen, gehalten ist. Zur Realisierung vorgenannter integraler Verteilerelemente 25, 26 sind in den hier gezeigten Ausführungsbeispielen in die entsprechenden Stirnseite des jeweiligen - hier massiven und balkenförmigen - Trägerelements 20 eine zentrale Vertiefung eingearbeitet, in deren jeweiligen Boden entsprechende stirnseitige Sacklochbohrungen einmünden. Wie beispielsweise aus der Zusammenschau der Fig. 2a, b und 5 ohne weiteres ersichtlich, kommuniziert jede dieser stirnseitigen Sacklochbohrungen unter Bildung jeweils eines der vorgenannten Durchlaßkanäle 21, 22, 23, 24 mit einer jeweils zugehörigen meßrohrseitigen Sacklochbohrung im Trägerelement 20, die ihrerseits wiederum auch in jeweils ein zugehöriges Ende eines der beiden Meßrohre 11, 12 mündet. Alternativ zu der Verwendung von zwei Meßrohren kann es, wie beispielsweise in der US-A 55 49 009 oder der WO-A 02/099363 gezeigt, aber auch von Vorteil sein, unter Verzicht auf die Verteilerelemente nur eines der beiden Aufnehmerrohre 11, 12 im Betrieb vom Medium durchströmen und insoweit als einziges Meßrohr des Meßaufnehmers fungieren zu lassen. Das andere der beiden Aufnehmerrohre kann dann beispielsweise als Schwingungskräfte des einzigen Meßrohrs ausgleichender Gegenschwinger dienen. Ferner ist auch möglich, wie beispielsweise in der EP-A 1 207 375 oder der US-B 68 51 323 gezeigt, im Meßaufnehmer nur ein einziges Aufnehmerrohr vorzusehen.

Zur Reduzierung von Schwingungsbewegungen und/oder zum gezielten Einstellen von Resonanzfrequenzen der Dopplerohranordnung sind gemäß einer Weiterbildung der Erfindung zumindest ein die beiden Aufnehmerrohre 11, 12 einlaßseitig miteinander mechanisch verbindendes erstes Koppelelement 13 sowie ein die beiden Aufnehmerrohre 11, 12 auslaßseitig miteinander mechanisch verbindendes zweites Koppelelement 14 im Meßaufnehmer vorgesehen.

Gemäß einer weiteren Ausgestaltung des erfindungsgemäßen Meßaufnehmers ist vorgesehen, daß das wenigstens eine Meßrohr 11 an zumindest einem ersten Ende 11' mittels einer ersten Rohrverschraubung 41 im Bereich des ersten Durchlaßkanals 21 am Trägerelement 20, insb. wieder lösbar, fixiert ist.

In den Fign. 2a, 3a und 4a sind teilweise im Schnitt exemplarische Varianten für eine solche Rohrverschraubung schematisch dargestellt.

In den hier gezeigten Ausführungsbeispielen wirkt jeweils eine mit einem Gewindestutzen 413' versehene Schraubhülse 413 mit einem am jeweiligen Meßrohrende kraft- und/oder formschlüssig entsprechend gehaltenen, insb. metallischen, Druckring 414 der Rohrverschraubung 41 zusammen. Dabei wird das jeweilige erste Ende 11' des Meßrohres 11 mittels Druckring 414 und darauf einwirkender Schraubhülse 413 gegen eine umlaufende, für die gewünschte Dichtwirkung ausreichend große Dichtfläche 416' eines Dichtsitz 416 so gepreßt, daß diese eine dazu im wesentlichen komplementäre, im Bereich des erste Endes 11' des Meßrohrs 11 vorgesehene und/oder beim Zusammenbau gebildete Dichtfläche des Meßrohrs 11 entsprechend innig kontaktiert.

Als Schraubhülse 413 kann bei den vorgeschlagen Rohrverschraubungen 41 beispielsweise eine entsprechende Schlüsselkanten aufweisende Überwurfmutter dienen. Der Druckring 414 wiederum kann beispielsweise als ein das Meßrohr kontaktierender ein- oder ggf. mehrteiliger Schneid-, Klemm- und/oder Keilring ausgebildet sein, der jeweils mittels der Schraubhülse gegen das jeweilige Ende 11' des Meßrohrs 11 gepreßt und insoweit an dieser haften gelassen wird. Anders gesagt kann die Rohrverschraubung 41 beispielsweise als Schneidringverbindung, Keilringverbindung oder Klemmringverbindung realisiert sein. Ferner ist auch möglich, den Druckring 414 gegen einen am Meßrohrende 11' vorgesehenen, die Dichtfläche 416' zumindest anteilig bildenden Bund wirken zu lassen. Der Bund kann z.B. nach dem Aufschieben des Druckrings 414 durch entsprechendes Aufstauchen des Meßrohrendes 11' erzeugt werden.

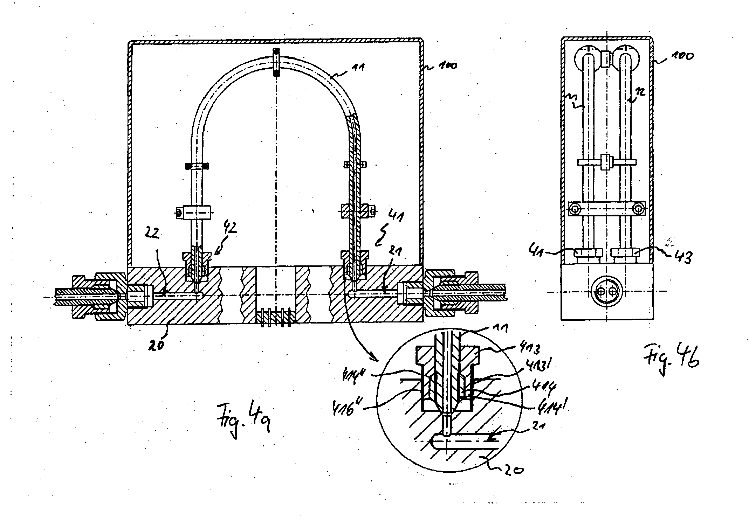

Bei den in Fig. 2a und 4a gezeigten Varianten ist der Druckring 414 der Rohrverschraubung 41 als auf das jeweiliges Ende 11' des Meßrohrs 11 aufgeschraubter Schraubring ausgebildet. Um bei dieser Variante die Verbindung zwischen dem Meßrohr 11 und dem Trägerelement 20 herzustellen wird vorerst der Druckring 414, bei welchem zumindest ein Teilbereich ein Innengewinde 414' aufweist, auf das hiefür mit einem entsprechenden Außengewinde versehene Ende des Meßrohrs 11' aufgeschraubt. Zur Verbesserung der Festigkeit dieser Rohrverschraubung kann der Druckring 414 nach dem Aufschrauben auf das Meßrohr 11 gegebenenfalls zusätzlich mit diesem verpreßt werden, so daß zusätzlich zu dem mittels der Schraubgewinde gebildeten Formschluß ein Reibschluß gebildet wird. Alternativ oder in Ergänzung dazu kann das bezüglich des Meßrohrendes 11' distale Teilstück 414" des Druckrings 414 auch mit Längsschlitzen und/oder einer konischen Anzugsfläche versehen sein, die wiederum mit einer komplementären Wirkfläche der hier als Überwurfmutter ausgebildeten Schraubhülse 413 entsprechend zusammenwirkt.

Beim Einschrauben der Schraubhülse 413 in ein dem Gewindestutzen 413' entsprechendes, im Dichtsitz 416 konzentrisch zum Meßrohr 11 angeordnetes Innengewinde 416" wird dann durch die Schraubhülse 413 eine Kraft auf die Anzugsfläche 414" des Druckrings 414 ausgeübt werden. Dabei preßt eine axiale Kraftkomponente der von der eingeschraubten Schraubhülse 413 ausgeübten Kraft den Druckring 414 und somit auch das Meßrohr 11 über seine Dichtfläche dicht gegen die Dichtfläche 416' des Dichtsitzes 416. Durch eine radiale Komponente der von der eingeschraubten Schraubhülse 413 ausgeübten Kraft wird zusätzlich der hier geschlitzte Teil 414" des - hier insoweit teilweise auch als Klemmring ausgebildete - Druckrings 414 gegen die Oberfläche des Meßrohrendes 11', so daß Druckring 414 und Meßrohr 11 schließlich an dieser Stelle zusätzlich miteinander verklemmt werden. Ein Vorteil der so hergestellten Rohrverschraubung 41 besteht darin, daß sie nicht nur hochdruckfest ausgelegt werden kann, sondern auch selbsthemmend und insoweit auch besonders vibrationsfest ist. Durch die Verwendung eines einstückigen Druckrings 414, welche an mehreren Stellen innerhalb der Verbindung verkeilt ist, wird vermieden, daß sich einzelne Teile unter der Einwirkung von Vibrationen gegenseitig lockern können, wie dies gelegentlich bei mehrteiligen Schneid- und/oder Klemmringen zu beobachten ist. Insofern kann es besonders für den Fall, daß der Meßaufnehmer für Anwendungen mit sehr hohen Betriebsdrücken vorgesehen ist, von Vorteil sein, anstelle von Rohrverschraubungen mit mehrteiligen Druckringen solche mit einteiligem Druckring zu verwenden.

Um eine möglichst große Dichtwirkung zu erzielen und somit auch eine möglichst hochdruckfeste Rohrverbindung bereitzustellen kann es des auch von Vorteil sein, das erste Ende des Meßrohrs im wesentlichen konisch und/oder sich nach außen hin verjüngend zu formen. Bei der in Fig. 2a gezeigten Variante sind daher das erste Ende 11' des Meßrohrs 11 als ein Innenkonus und der Dichtsitz 416 entsprechend als ein dazu komplementärer Außenkonus ausgebildet. Dementsprechend ist die hier konisch ausgebildete erste Dichtfläche des Meßrohrs 11 zumindest anteilig konvex geformt, während die ebenfalls konisch ausgebildete Dichtfläche 416' des Dichtsitzes 416 der ersten Rohrverschraubung zumindest anteilig konkav geformt ist. Gemäß einer weiteren Ausgestaltung der Erfindung ist vorgesehen, die Dichtfläche 416' des Dichtsitzes 416 der ersten Rohrverschraubung konisch so auszubilden, daß sie einen Flankenwinkel aufweist, der von einem komplementären Flankenwinkel der, ggf. ebenfalls konisch ausgebildeten, Dichtfläche des ersten Endes 11' des Meßrohrs 11 verschieden ist. Insbesondere für den vorgenannten Fall, daß sowohl die Dichtfläche des Meßrohrs 11 als auch die Dichtfläche 416' des Dichtsitzes 416 konisch ausgebildet sind, ist gemäß einer weiteren Ausgestaltung der Erfindung vorgesehen, daß ein Flankenwinkel der Dichtfläche 416' des Dichtsitzes 416 kleiner ist als ein. Flankenwinkel der Dichtfläche des ersten Endes 11' des Meßrohrs 11. Statt der in den Fig. 2a und 4a gezeigten, ggf. auch leicht voneinander abweichenden, Innen- bzw. Außenkonusse können auch andere Dichtflächen, beispielsweise sphärische oder, wie beispielsweise in Fig. 3a gezeigt, auch zylindrische Flächen, am Meßrohrende 11' und/oder im Dichtsitz 416 vorgesehen sein, ggf. auch mit voneinander signifikant abweichenden Grundformen. Beispielsweise kann auch ein stumpfes Meßrohrende in einen konischen Dichtsitz mediumsdicht, insb. auch druckdicht, eingesetzt werden.

Der Dichtsitz 416 wird bei der in Fig. 2a gezeigten Variante der Erfindung von einem Anschlußelement 41' der Rohrverschraubung bereitgestellt, das im Bereich des zumindest ersten Durchlaßkanals 21 mit dem Trägerelement 20, insb. wieder lösbar, verbunden ist. Im hier gezeigten Ausführungsbeispiel weist das Anschlußelement 415 einen entsprechenden Anschlußstutzen mit einem Außengewinde 415' auf, mittels dem es in den ein entsprechendes Innengewinde 21' aufweisenden Durchlaßkanal 21 eingeschraubt ist. Insbesondere für den Fall, daß der Druckring 414 als Klemm-, Schneid- und/oder Keilring ausgebildet ist, kann es von Vorteil sein, wenn das Anschlußelement 415, wie auch in Fig. 3a dargestellt, einen Gewindestutzen mit einem Außengewinde 415" für ein dem entsprechendes Innengewinde 413" in der Schraubhülse 413 aufweist. Bei dieser Variante wird also Schraubhülse 413 auf den Gewindestutzen aufgeschraubt, um die für Fixierung des Meßrohrs im Dichtsitz 416 erforderliche Anpreßkraft zwischen Druckring 414 und Meßrohr 11 einerseits und Druckring 414 und Anschlußelement 415 anderseits zu erzeugen. Die verwendeten Rohrverschraubungen können dabei auch von solcher Art sein, wie sie beispielsweise auch in der US-B 67 66 582, US-B 65 02 323, US-B 66 40 457, US-A 45 86 731, GB-A 14 73 984 vorgeschlagen sind. Ein Vorteil dieser beiden vorgenannten Varianten ist u.a. auch darin zu sehen, daß die wenigstens eine Rohrverschraubung 41 praktisch vollständig mittels herkömmlicher, insb. auch genormter, vibrationsfester Rohrverschraubungen realisiert werden kann, wie z.B. Swagelok® von der Firma Swagelok Co., Solon, OH, US, Nova Swiss® Typ von der Firma Nova Werke AG, Effretikon, CH, EO2-Form von der Firma Parker Hannifin Corp. oder der gleichen. Im besonderen kann dabei in vorteilhafter Weise auch auf solche etablierten Rohrverschraubungen zurückgegriffen werden, die sich sowohl in Anwendungen mit starken Vibrationen als auch mit hohen Betriebsdrücken bewährt haben.

Im Gegensatz zu den in Fig. 2a oder 3a gezeigten Varianten ist bei der in der Fig. 4a gezeigten Variante der Dichtsitz 416 direkt in Trägerelement 20 eingeformt und insoweit als ein integraler Bestandteil davon ausgebildet. In vorteilhafter Weise kann aber auch hierbei der jeweilige Dichtsitz 416 in weiten Teilen, insb. im Bereich des Dichtfläche 416', ebenfalls den entsprechenden Anschlußelementen etablierter vibrationsfester, insb. auch hochdruckfester, Rohrverschraubungen nachempfunden werden, insb. jenen mit Schraubring oder Schraub-/Klemmring.

Wenngleich die Fixierung des wenigstens eine Meßrohrs anhand einer Rohrverschraubung 41 erläutert worden ist, ist es durchaus einsichtig daß das Meßrohr in vorteilhafter Weise auch an seinem zweiten Ende 11" mittels einer entsprechenden Rohrverschraubung am Trägermittel 20 fixiert ist. Beispielsweise kann so auch eine allenfalls defekte Rohrverbindung und/oder eine defektes Meßrohr gegebenenfalls gegen entsprechend intakte Komponenten ausgetauscht werden. Gemäß einer Weiterbildung der Erfindung ist ferner vorgesehen, daß das wenigstens eine Meßrohrs 11 an seinem ersten Ende 11 mittels einer, insb. auch hochdruckfesten, ersten Rohrverschraubung 41 und gleichermaßen auch an seinem zweiten Ende 12 mittels einer, insb. zur ersten Rohrverschraubung 41 im wesentlichen baugleichen, zweiten Rohrverschraubung 42 am Trägermittel 20 fixiert ist. Für den oben beschriebenen Fall, daß der Meßaufnehmer wenigstens zwei Meßrohre 11, 12 umfaßt ist gemäß einer anderen Weiterbildung ferner vorgesehen, daß jedes der beiden Meßrohre 11, 12 sowohl einlaßseitig als auch auslaßseitig jeweils mittels einer, insb. hochdruckfesten, Rohrverschraubung 41, 42, 43 oder 44 am Trägermittel 20 entsprechend fixiert ist.

Es sei an dieser Stelle noch erwähnt, daß, wie beispielsweise aus der Zusammenschau von Fig. 2a und 2b ohne weiteres ersichtlich, sämtlich der dem Fixieren des wenigstens einen Meßrohrs 11 am Trägermittel 20 dienenden Rohrverschraubungen 41, 42, insb. auch im Gegensatz zu den oben erwähnten Verbindungselementen 31, 32, innerhalb der Meßrohr-Gehäusekappe 100 und insoweit auch innerhalb des Meßaufnehmers angeordnet sind.

Die Festigkeit, insb. auch die Druckfestigkeit, und insoweit auch die Betriebssicherheit des Meßaufnehmers wird erfindungsgemäß unter Gewährleistung einer nach wie vor ausreichend hohen Empfindlichkeit auf die jeweils vom Medium zu messen physikalische Meßgröße ferner dadurch weiter erhöht, daß das wenigstens eine Meßrohr 11, zumindest aber jenes mit den Schwingungssensoren und dem Schwingungserreger unmittelbar korrespondierende mittlere Rohrsegment, das betriebsgemäß schwingengelassen ist, aus einem zumindest anteilig kalt verfestigten, insb. kalt gestreckten oder autofrettierten, Material gefertigt ist. Durch Autofrettage kann, wie in Fig. 6 schematisch dargestellt, eine plastische im wesentlichen zirkulär verlaufende Kaltverformung der Innenwand des Meßrohres, beispielsweise bis zu einer relative Eindringtiefe s' von etwa 20% bis 50% der Meßrohr-Wandstärke s (s' = 0,2s...0,5s), erzeugt werden, so daß dieses zumindest im betriebsdruckfreien Zustand eine, insb. zirkulär, umlaufende, insb. sich über die gesamte Meßrohrlänge erstreckende, innere Zone I plastischer Verformung und eine, insb. zirkulär, umlaufende, insb. sich über die gesamte Meßrohrlänge erstreckende, äußere Zone II elastischer Verformung aufweist. Dies kann beispielsweise auch unter Verwendung der bereits erwähnten Materialien für die Meßrohre realisiert werden, wie beispielsweise Duplex-Stahl, Superduplex-Stahl oder andere Chrom-Nickel-Mangan-Molybdän-Stähle. Infolge der mit der durch anteilig plastische Verformung der Meßrohr-Innenwand erzielte Kaltverfestigung einhergehende bleibende radiale und tangentiale Verspannung der Meßrohrwand kann das Meßrohr 11, wie auch aus Fig. 7 ersichtlich, insb. auch im Vergleich mit Fig. 6, gegenüber dem Initialzustand in erheblichem Maße betriebsfester und somit druckbeständiger ausgelegt werden. Durch Verfestigten des wenigstens einen Meßrohrs 11 kann dieses, insb. auch im Hinblick auf die Druckfestigkeit wie auch die Dauerfestigkeit, in erheblichem Maße widerstandsfähiger ausgebildet sein, als in dieser Hinsicht unbehandelte Meßrohre gleicher Abmessung.

Als für die Autofrettage geeignet haben sich dabei, insb. auch im Hinblick auf eine ausreichend hohe Meßempfindlichkeit des Meßaufnehmers bei gleichzeitig hoher Druckfestigkeit, solche Meßrohren erwiesen, die initial ein Verhältnis DN/s des Innen-Durchmessers des Meßrohrs zu dessen Meßrohr-Wandstärke s aufweist das in einem Bereich zwischen 1,2 und 8 liegt. Dies im besonderen auch für Betriebsdrücke von mehr als 500 bar, insb. auch von über 700 bar. Gemäß einer weiteren Ausgestaltung der Erfindung ist das wenigstens eine autofrettierte Meßrohr 11 hinsichtlich seiner Abmaße, insb. Nennweite DN, Wandstärke s und relativer Eindringtiefe s', ferner so ausgebildet, daß es folgende Dimensionierungsvorschrift erfüllt:

$$1.83 < a \cdot \left(\frac{s}{DN}\right) + b \cdot \left(\frac{s}{DN}\right) + c \cdot \left(\frac{s}{DN}\right) + d < 2.8$$ wobei sich die Koeffizienten a, b, c und d in Abhängigkeit von der tatsächlich gewählten relativen Eindringtiefe s' wie folgt ergeben:

Tabelle 1

| s' | a | b | c | D |
|------|---------|--------|--------|--------|
| 0,2 | -0,0604 | 0,3032 | 0,7824 | 1,6994 |
| 0,3 | -0,0706 | 0,4284 | 0,9942 | 1,7045 |
| 0,4 | -0,072 | 0,5185 | 1,1018 | 1,7013 |
| 0,5 | -0,0691 | 0,5604 | 1,1168 | 1,6994 |

Bei Verwendung eines in der vorbeschriebenen Weise dimensionierten Meßrohrs kann beispielsweise die Druckfestigkeit des Meßaufnehmers im Vergleich zu einem herkömmlichen Meßaufnehmer mit im übrigen gleichen Abmessungen und Materialien ohne weiteres um 5% bis etwa 60% erhöht werden.

Die zur Realisierung des Autofrettage erforderlichen Verformungskräfte können beispielsweise dadurch erzeugt werden, daß ein geeignetes Fluid, insb. eine Flüssigkeit wie Öl oder Wasser oder ein Flüssigkeits-Gas-Gemisch, in ein Lumen des bereits verbauten Meßrohrs eingeleitet wird, und daß dieses eingeleitete Fluid mit einer einen statischen Druck des Fluids ausreichend, insb. auf etwa das 1,5- bis 3-fache des nominellen Betriebsdrucks, erhöhenden Kraft beaufschlagt wird. Somit kann auch das bereits mit dem Trägermittel verbundene in vorteilhafter Weise auch in-situ - also in Einbauform und - lage - autofrettiert werden. Alternativ oder in Ergänzung zu einer In-situ-Autofrettage des Meßrohrs kann dieses zumindest anteilig auch vorab entsprechend kaltverfestigt, insb. auch autofrettiert, werden.

Für den oben beschriebenen Fall, daß das wenigstens eine Meßrohr 11 an seinen beiden Enden jeweils mit einem Außengewinde versehen ist, kann es zumindest bei kaltverformten, insb. autofrettierten, Material von Vorteil sein, das Außengewinde für den Druckring 414 jeweils in die Meßrohrwand einzurollen.

Zur Vermeidung thermischer Überbelastungen des durch Kaltverformung verfestigten Meßrohrs ist gemäß einer weiteren Ausgestaltung der Erfindung ferner vorgesehen, die am wenigstens einen Meßrohr 11 fixierten Komponenten des oben erwähnten wenigstens eine Schwingungserreger 16 und/oder der jeweils verwendeten Schwingungssensoren 17, 18 mit dem wenigstens einen, insb. autofrettierten, Meßrohr 11 lediglich kraft- und/oder formschlüssig, insb. wieder lösbar, zu verbinden, und zwar unter Verzicht auf stoffschlüssige Verbindungen mit hoher Verarbeitungstemperatur, wie sie Löt- oder Schweißverbindungen. Für den oben beschriebnen Fall, daß der Meßaufnehmer mittels Dopplerohranordnung gebildet ist und daß die beiden Aufnehmerrohre zusätzlich mittels der wenigstens zwei Koppelelemente 13, 14 ein-und auslaßseitig miteinander mechanische verkoppelt sind, ist gemäß einer anderen Ausgestaltung der Erfindung ferner vorgesehen die wenigstens zwei Koppelelemente mit den beiden Aufnehmerrohren 11, 12 lediglich kraft- und/oder formschlüssig, insb. wieder lösbar, zu verbinden.

Kraft- und/oder formschlüssige Verbindungen können z.B. durch Aufpressen und/oder Aufklemmen der jeweiligen Komponente auf das Meßrohr hergestellt werden. Dafür entsprechend geeignete Verfahren sind beispielsweise in den eingangs erwähnten US-B 60 47 457 oder der eigenen nicht vorveröffentlichten U.S. Anmeldung 11/242,803 beschrieben. Darüber hinaus können auch herkömmliche, insb. weitgehend vibrationsfeste, Rohrklemmen für das Fixieren von Schwingungserreger und/oder Schwingungssensor verwendet werden. Zur Minimierung von allfälligen Mikroreibungen im Bereich solcher auf das wenigstens eine vibrierende Meßrohr 11 aufgeklemmter Komponenten können deren das Meßrohr 11 kontaktierende Wirkflächen beispielsweise poliert und/oder leicht ausbauchend ausgebildet sein. Gleichermaßen können zudem auch die entsprechenden Wirkflächen des wenigstens einen Meßrohrs 11 zumindest poliert sein.

Ein Vorteil des erfindungsgemäßen Meßaufnehmers darin zu sehen, daß dieser, insb. aber auch das wenigstens eine Meßrohr, einerseits betriebsmäßig hohen Mediumsdrücken von 700 bar oder darüber widerstehen kann, und daß anderseits Meßrohre mit vergleichsweise geringen Wandstärken verwendet werden können. Somit ist der erfindungsgemäße Meßaufnehmer und insoweit auch das In-Line-Meßgerät besonders auch für Anwendungen mit, insb. auch der Betankung von Kraftfahrzeugen dienendem, komprimiertem Wasserstoff geeignet.

**Patentansprüche**

1. Meßaufnehmer (1) vom Vibrationstyp, insb. Coriolls-Massendurchfluß-Meßaufnehmer, für ein dem Messen eines in einer Leitung strömenden Mediums dienendes In-Line-Meßgerät, welcher Meßaufnehmer

   - wenigstens ein mit der Leitung kommunizierendes Meßrohr (11) zum Führen des Mediums, sowie
   - ein das wenigstens eine Meßrohr schwingfähig halterndes Trägerelement (20) umfaßt, **dadurch gekennzeichnet, dass**
   - das wenigstens eine Meßrohr einen solchen Innen-Durchmesser (DN) und eine solche Wandstärke (s) aufweist, das ein Verhältnis (DN/s) des Innen-Durchmessers (DN) zur Meßrohr-Wandstärke (s) in einem Bereich zwischen 1,2 und 8 liegt,
   - das wenigstens eine Meßrohr, insb. ein mittleres Rohrsegment davon, zumindest anteilig aus kaltverfestigtern Material besteht,
   - die Wand des wenigstens einen Meßrohrs eine, insb. zirkulär, umlaufende, insb. sich über die gesamte Meßrohrlänge erstreckende, innere Zone (I) plastischer Verformung und

   eine, insb. zirkulär, umlaufende, insb. sich über die gesamte Meßrohrlänge erstreckende, äußere Zone (II) elastischer Verformung aufweist und das Meßrohr eine im wesentlichen zirkulär verlaufende plastische Kaltverformung der Innenwand des Meßrohres bis zu einer relative Eindringtiefe (s') von etwa 20% bis 50% der Meßrohr-Wandstärke aufweist.

2. Meßaufnehmer nach Anspruch 1, wobei das wenigstens eine Meßrohr zumindest anteilig aus kaltgestrecktern Material besteht.

3. Meßaufnehmer nach einem der Ansprüche 1 bis 2, wobei das Trägerelement ein, insb. massives und/oder monolithisches, metallisches Bauteil mit darin eingebrachten Durchlaßkanälen (21, 22) ist, über die das wenigstens eine Meßrohr mit der an den Meßaufnehmer angeschlossenen Leitung kommuniziert.

4. Meßaufnehmer nach einem der Ansprüche 1 bis 3, wobei das wenigstens eine Meßrohr, insb. U- förmig oder V-förmig, gebogen ist.

5. Meßaufnehmer nach einem der Ansprüche 1 bis 4, wobei das wenigstens eine Meßrohr, mittels, insb. hochdruckfester, Rohrverschraubungen (41), insb. wieder lösbar, mit dem Trägerelement verbunden ist.

6. Meßaufnehmer nach dem vorherigen Anspruch, wobei zumindest eine der Rohrverschraubungen als Schraub-, Klemm- oder Schneidringverschraubung ausgebildet ist.

7. Verwenden eines Meßaufnehmers gemäß einem der vorherigen Ansprüche zum Messen eines in einer Rohrleitung strömenden Mediums, das mit einem Druck von mehr als 500 bar, insb. von mehr als 700 bar, auf das Meßrohr wirkt.

8. In-Line-Meßgerät zum Messen und/oder Überwachen wenigstens eines Parameters, beispielsweise einem Massendurchfluß, einer Dichte, einer Viskosität etc., eines in der Bohrleitung strömenden Mediums, welches In-Line-Meßgerät einen Meßaufnehmer (1) gemäß einem der Ansprüche 1 bis 6 umfaßt.

9. Verfahren zum Herstellen eines Meßaufnehmers (1) gemäß einem der Ansprüche 1 bis 6, welches Verfahren einen Schritt des Autofrettierens des Meßrohrs (11) umfaßt.

10. Verfahren nach den vorherigen Anspruch, weiters umfassend einen Schritt des Montierens des Meßrohrs Im Trägerelement (20).

11. Verfahren nach den vorherigen Anspruch, wobei der Schritt des Autofrettierens des Meßrohrs (11) nach dem des Montieren des Meßrohrs (11) im Trägerelement (20) durchgeführt wird.

**Claims**

1. Vibronic-type sensor (1), particularly a Coriolis mass flow sensor, for an in-line measuring device, which is used to measure a medium flowing through a pipe, wherein said sensor:

- comprises at least one measuring tube (11), which communicates with the pipe and transports the medium, and
- a support element (20) that supports the one measuring tube, at least, in a way that allows vibration
- **characterized in that** the one measuring tube, at least, has such an internal diameter (DN) and such a wall thickness (s) that the ratio (DN/s) of the internal diameter (DN) to the measuring tube wall thickness (s) is in a range between 1.2 and 8,
- **characterized in that** the one measuring tube, at least, notably a central tube segment of the measuring tube, consists, at least in part, of a work-hardened material
- **characterized in that** the wall of the one measuring tube, at least, has an inner zone (I) of plastic deformation, particularly a circular, circumferential zone, that extends over the entire length of the measuring tube, and an outer zone (II) of elastic deformation, particularly a circular, circumferential zone, that extends over the entire length of the measuring tube, and **in that** the measuring tube displays an essentially circular plastic cold deformation of the inner wall of the measuring tube up to a relative penetration depth (s') of roughly 20% to 50% of the thickness of the measuring tube wall.

2. Sensor as claimed in Claim 1, wherein the one measuring tube, at least, consists at least in part of work-hardened material.

3. Sensor as claimed in one of the Claims 1 to 2, wherein the carrier element is a metal component, particularly a solid and/or monolithic component, with passage channels (21, 22) implemented in the component, via which the one measuring tube, at least, communicates with the pipe connected to the sensor.

4. Sensor as claimed in one of the Claims 1 to 3, wherein the one measuring tube, at least, is bent in a U-shape or V-shape.

5. Sensor as claimed in one of the Claims 1 to 4, wherein the one measuring tube, at least, is connected to the carrier element via pipe unions (41), particularly pipe unions that withstand high pressure, particularly in a way that is not permanent.

6. Sensor as claimed in the previous claim, wherein at least one of the pipe unions is a screw, clamp or compression type joint.

7. Use of a sensor as defined in one of the previous claims to measure a medium flowing through a pipe, said medium acting on the measuring tube with a pressure of over 500 bar, and particularly of over 700 bar.

8. In-line measuring device for measuring and/or monitoring at least one parameter, for example a mass flow, density, viscosity etc. of a medium flowing through the pipe, said in-line measuring device comprising a sensor (1) as defined in one of the claims 1 to 6.

9. Process to produce a sensor (1) as defined in one of the claims 1 to 6, wherein a step in said process involves the autofrettage of the measuring tube (11).

10. Process as claimed in the previous claim, wherein said process further comprises a step of mounting the measuring tube in the carrier element (20).

11. Process as claimed in the previous claim, wherein the step involving the autofrettage of the measuring tube (11) is performed after mounting the measuring tube (11) in the carrier element (20).

**Revendications**

1. Transmetteur de mesure (1) du type à vibrations, notamment un débitmètre massique Coriolis, pour un appareil en ligne servant à la mesure d'un produit s'écoulant dans une conduite, lequel transmetteur de mesure

    - comprend au moins un tube de mesure (11) communiquant avec la conduite, destiné à acheminer le produit, ainsi
    - qu'au moins un élément-support (20) supportant un tube de mesure de telle sorte qu'il puisse vibrer,
    **caractérisé en ce que**
    - l'au moins un tube de mesure présente un tel diamètre intérieur (DN) et une telle épaisseur de paroi (s) qu'un rapport (DN/s) du diamètre intérieur (DN) par rapport à l'épaisseur de paroi de tube de mesure (s) se situe dans une plage comprise entre 1,2 et 8,
- l'au moins un tube de mesure, notamment un segment de tube médian de celui-ci, est constitué au moins partiellement d'un matériau écroui,
- la paroi de l'au moins un tube de mesure présente une zone intérieure (I) de déformation plastique, notamment circulaire, périphérique, notamment s'étendant sur toute la longueur du tube de mesure, et une zone extérieure (II) de déformation élastique, notamment circulaire, périphérique, notamment s'étendant sur toute la longueur du tube de mesure, et le tube de mesure présente un formage à froid plastique de la paroi intérieure de tube de mesure, pour l'essentiel circulaire, jusqu'à une profondeur de pénétration (s') relative d'environ 20 % à 50 % de l'épaisseur de paroi de tube de mesure.

2. Transmetteur de mesure selon la revendication 1, pour lequel l'au moins un tube de mesure est constitué au moins partiellement d'un matériau étiré à froid.

3. Transmetteur de mesure selon l'une des revendications 1 à 2, pour lequel l'élément-support est un composant métallique, notamment massif et/ou monolithique, dans lequel sont réalisés des canaux de passage (21, 22), à travers lesquels l'au moins un tube de mesure communique avec une conduite raccordée au transmetteur de mesure.

4. Transmetteur de mesure selon l'une des revendications 1 à 3, pour lequel l'au moins un tube de mesure est coudé, notamment en forme de U ou en forme de V.

5. Transmetteur de mesure selon l'une des revendications 1 à 4, pour lequel l'au moins un tube de mesure est relié avec l'élément-support au moyen de raccords vissés (41), notamment résistant à la haute pression, notamment amovibles.

6. Transmetteur de mesure selon la revendication précédente, pour lequel au moins l'un des raccords de tube est exécuté en tant que raccord union fileté, coulissant ou à bague de coupe.

7. Utilisation d'un transmetteur de mesure selon l'une des revendications précédentes, destiné à la mesure d'un produit circulant dans une conduite, qui agit avec une pression de plus de 500 bar, notamment de plus de 700 bar, sur le tube de mesure.

8. Appareil de mesure en ligne destiné à la mesure et/ou la surveillance d'au moins un paramètre, par exemple un débit massique, une densité, une viscosité, etc., d'un produit circulant dans la conduite, lequel appareil de mesure en ligne comprend un transmetteur de mesure (1) selon l'une des revendications 1 à 6.

9. Procédé destiné à la fabrication d'un transmetteur de mesure (1) selon l'une des revendications 1 à 6, lequel procédé comprend une étape d'autofrettage du tube de mesure (11).

10. Procédé selon la revendication précédente, comprenant en outre une étape de montage du tube de mesure dans l'élément-support (20).

11. Procédé selon la revendication précédente, pour lequel l'étape de l'autofrettage du tube de mesure (11) est réalisée après le montage du tube de mesure (11) dans l'élément-support (20).

Fig. 1

Fig. 2a

Fig. 2b

EP 1 996 902 B1

Fig. 39

Fig. 36

Fig. 4b

Fig. 4a

Fig. 5

Dn+2s

Dn+s'*2s

Dn

Fig. 6

Querschnitt durch Rohrwand (Zentrum rechts)

- tangentiale Spannung bei Autofrettagedruck
- tangentiale Spannung bei Betriebsdruck (autofrettiert)
- tangentiale Spannung ohne Betriebsdruck (autofrettiert)
- tangentiale Spannung bei Betriebsdruck ohne Autofrettage

tangentiale Spannung (N/mm^2)

Rohrwand

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4127028 A
- US 4524610 A
- US 4768384 A
- US 4793191 A
- US 4823614 A
- US 5253533 A
- US 5301557 A
- US 5610342 A
- US 6006609 A
- US 6047457 A
- US 6168069 B
- US 6314820 B
- US 6352196 B
- US 6397685 B
- US 6450042 B
- US 6487917 B
- US 6516674 B
- US 6519828 B
- US 6523421 B
- US 6598281 B
- US 6666098 B
- US 6698644 B
- US 6711958 B
- US 6769163 B
- US 6776053 B
- US 6807866 B
- US 7005019 B
- US 20050160787 A
- WO 03048693 A
- WO 05050144 A
- WO 0036379 A
- EP 1296128 A
- WO 02099363 A
- US 5796011 A
- US 6168069 A
- US 6698644 A
- US 6598281 A
- US 6634241 B
- US 4090382 A
- US 3745633 A
- DE 10000796 A1
- US 5549009 A
- EP 1207375 A
- US 6851323 B
- US 6766582 B
- US 6502323 B
- US 6640457 B
- US 4586731 A
- GB 1473984 A
- US 6047457 B
- US 11242803 B